Europäisches Patentamt

**European Patent Office**

**Office européen des brevets**

(11) Veröffentlichungsnummer: **0 557 854 A1**

## (12) EUROPÄISCHE PATENTANMELDUNG

(21) Anmeldenummer: **93102368.3**

(22) Anmeldetag: **16.02.93**

(51) Int. Cl.5: **H01J 47/06**, G01T 1/17

(30) Priorität: **26.02.92 DE 4205830**

(43) Veröffentlichungstag der Anmeldung:
**01.09.93 Patentblatt 93/35**

(84) Benannte Vertragsstaaten:
**DE FR GB**

(71) Anmelder: **LABORATORIUM PROF. DR. RUDOLF BERTHOLD GmbH & Co. KG**
**Calmbacher Strasse 22**
**D-75323 Bad Wildbad(DE)**

(72) Erfinder: **Filthuth, Heinz, Prof. Dr.**
**Bahnhofstrasse 29**
**W-7540 Neuenbürg(DE)**

(74) Vertreter: **Frank, Gerhard, Dipl.-Phys.**
**Patentanwälte Mayer, Frank, Reinhardt,**
**Westliche 24**
**D-75172 Pforzheim (DE)**

(54) **Ortsempfindlicher Detektor zum Nachweis von radioaktiver Strahlung.**

(57) Ein ortsempfindlicher Strahlungsdetektor zum Nachweis insbesondere von Beta-Strahlung besteht aus einem ersten, oberhalb der Strahlungsquelle angeordneten, ortsempfindlichen Detektor (10) und einem weiteren, oberhalb dieses ersten Detektors angeordneten etwa flächengleichen, nicht notwendigerweise ortsempfindlichen zweiten Detektor (20); die Zählimpulse der beiden Detektoren werden durch eine Auswerteeinheit in zeitlicher und logischer Hinsicht entweder in Koinzidenz oder Antikoinzidenz korreliert.

Abhängig vom Strahlertyp und dessen Vorliegen beispielsweise auf einer Probenplatte ermöglicht die Wahl entweder der Koinzidenz- oder der Antikoinzidenzmethode eine deutliche Verbesserung der Ortsauflösung oder der Nachweisempfindlichkeit.

FIG.1

EP 0 557 854 A1

Die Erfindung betrifft einen ortsempfindlichen Detektor zum Nachweis von radioaktiver Strahlung, insbesondere von $\beta$-Strahlung von 32P oder 14C.

Ein ortsempfindlicher Detektor ist beispielsweise aus der DE-OS 37 35 296 bekannt: Er besteht im wesentlichen aus einem Proportionalzählrohr mit mindestens zwei Drahtebenen mit mehreren parallel verlaufenden Drähten, die zur Auslesung der x- und y-Impulse dienen, aus denen dann mit Verzögerungsleitungen die Ortsinformation gewonnen wird.

Das grundsätzliche Problem bei derartigen ortsempfindlichen Detektoren besteht darin, einerseits eine möglichst hohe Ortsauflösung zu erreichen, d.h., möglichst dicht beieinander liegende Strahlungsquellen noch getrennt wahrnehmen zu können, andererseits eine hohe Nachweisempfindlichkeit zu erzielen, d.h., möglichst alle von dieser Strahlenquelle ausgehenden Partikel und deren Sekundärteilchen zu erfassen. In der Regel muß zwischen beiden Anforderungen ein Kompromiß gefunden werden:

Zur Erreichung sowohl einer hohen Ortsauflösung als auch einer großen Nachweisempfindlichkeit ist es zunächst als grundlegende Voraussetzung, insbesondere zum Nachweis schwach-energetischer Strahlung anzusehen (beispielsweise 3H-$\beta$-Strahlung), die Eintrittsebene bzw. die untere Zählebene des ortsempfindlichen Detektors möglichst nahe an die nachzuweisende Probe bzw. die Probenplatte heranzubringen, auf der sich die nachzuweisenden. radioaktiven Präparate befinden und deren Ortsverteilung auf dieser Probenplatte bestimmt werden soll. Dadurch ist gewährleistet, daß praktisch alle Teilchen erfaßt werden und mit minimiertem Abstand der Probenplatte zum ortsempfindlichen Detektor verbessert sich auch die Ortsauflösung. Aus verschiedenen Gründen, beispielsweise zur Vermeidung von Kontaminationen des Detektors bei zu dichtem Aufsitzen auf der Probenplatte, ist es jedoch in der Praxis schwierig, einen minimalen Abstand von 0,5 mm zu unterschreiten. Eine weitere Einschränkung besteht im konstruktiven Aufbau der Zähldrahtebenen, die nicht beliebig aneinandergerückt werden können.

Ein Ausweg aus dieser Situation ist die Verwendung eines Kollimators, beispielsweise einer Kollimatorplatte als Lochplatte mit zylindrisch oder wabenartig ausgebildeten Löchern, die aus dem grundsätzlich unter einem Raumwinkel von 2 anfallenden, isotropen Strahlung nur einen sehr geringen Raumwinkel auswählen, also solche Strahlung, die mehr oder weniger senkrecht zu den Auslesegittern des ortsempfindlichen Detektors auftrifft. Mit dieser Ausblendung der "zu schräg" verlaufenden, nachzuweisenden Teilchen wird zwar eine Erhöhung der Ortsauflösung erzielt, dies geht naturgemäß jedoch auf Kosten der Nachweisempfindlichkeit, da die ausgeblendeten Teilchen eben nicht gezählt werden.

Darüber hinaus sind derartige Kollimatorplatten, sofern sie eine spürbare Verbesserung der Ortsauflösung (bis zu etwa 1 mm) erreichen sollen, mechanisch sehr schwierig herzustellen, da die hierfür in die Platte einzubringenden Bohrungen nur einen minimalen Durchmesser besitzen.

Zusätzlich zu diesem Ausblend-Effekt verschlechtern derartige Kollimatorplatten, insbesondere beim Nachweis schwach-energetischer Strahlung, auch deswegen die Nachweisempfindlichkeit, da sie notwendigerweise den Abstand Probenplatte-Detektor um einige Millimeter vergrößern.

Aufgabe der Erfindung ist es, einen ortsempfindlichen Detektor derart weiterzubilden, daß er eine Erhöhung der Ortsauflösung ohne die Verwendung eines Kollimators erreichen kann, und der insbesondere zur Messung höher-energetischer Strahlung geeignet ist.

Erfindungsgemäß wird diese Aufgabe gemäß dem kennzeichnenden Teil des Patentanspruchs 1 gelöst.

Ausgangspunkt des Erfindungsgedankens ist folgende Überlegung:

Die $\beta$-Strahlung wie z.B. von 32P oder von 14C besteht aus Partikel, deren Energien und damit auch deren mittlere Reichweiten über einen größeren Bereich streuen und zu einem bestimmten Energiespektrum bzw. Reichweitenspektrum führen. Hierbei liegt bei Proben bestimmter Dicke infolge der auftretenden Oberflächenladungen das Schwergewicht bei geringeren Strahlungsenergien, d.h., die Anzahl der energie-ärmeren Partikel ist in der Überzahl gegenüber der Anzahl der energiereichen Partikel mit entsprechend hoher Reichweite.

Ein Teil der $\beta$-Teilchen aus dem Zerfall beispielsweise von 32P oder 14C, die in der Probenschicht etwa homogen verteilt sind, wird in der Probe abgebremst und abgelenkt; die hierbei entstehende $\gamma$-Strahlung (Bremsstrahlung aus Photonen vorwiegend niedrigerer Energie) ist nun ihrerseits in der Lage, aus der Probenschicht durch Fotoeffekt und Comptoneffekt Elektronen herauszuschlagen, die eine energieabhängige Winkelverteilung haben. Diese Elektronen tragen insbesondere auch zum nieder-energetischen Ende der Strahlungsverteilung bei bzw. überlagern dieses und beeinträchtigen wegen ihrer breit gefächerten Winkelverteilung die Ortsauflösung.

Hinzu kommen noch unerwünschte Nebeneffekte durch Umgebungsstrahlung und kosmische Strahlung, wobei die Umgebungsstrahlung im wesentlichen in den nieder-energetischen Bereich des Spektrums fällt und die kosmische Strahlung hauptsächlich in den höherenergetischen Bereich des Spektrums.

Der Grundgedanke der Erfindung besteht nun darin, mit dem zusätzlichen Detektor eine Reichweiten-Diskriminierung und damit auch eine Energie-Diskriminierung durchzuführen, in dem Sinne, daß aus dem angebotenen Gesamtstrahlungsspektrum wahlweise der niederenergetische- oder der höher-energetische Teil zur Auswertung, d.h. zur Gewinnung der Ortsinformation, ausgewählt wird. Je nach logischer Zuordnung der beiden Detektoren (Koinzidenz oder Antikoinzidenz) können zwei Betriebsweisen realisiert werden, die beide das gemeinsame Prinzip verfolgen, nur solche Teilchen zur Zählung zuzulassen, deren Energie bzw. Reichweite oberhalb bzw. unterhalb einer bestimmten Grenze des Energiespektrums bzw. einer bestimmten Reichweite liegen. Bei der ersten Betriebsweise (Koinzidenzschaltung der beiden Detektoren) werden nur solche Teilchen (bzw. deren Sekundärteilchen) nachgewiesen, die beide Detektoren passiert haben und dort zu einem Zählimpuls geführt haben. Durch Wahl des Abstandes zwischen den beiden Detektoren oder auch durch Zwischenfügung eines Absorbers, z.B. einer Folie, in Abhängigkeit von dem nachzuweisenden Strahlungspräparat kann erreicht werden, daß somit im Endeffekt nur die höher-energetischen Partikel nachgewiesen werden.

Der Vorteil dieser Betriebsweise (Koinzidenzschaltung der beiden Detektoren) liegt darin, daß mit dem Unterdrücken der schwachenergetischen Strahlung bei der Gewinnung der Ortsinformation insbesondere auch die oben genannten nieder-energetischen Bremsstrahlungsanteile sowie entsprechend nieder-energetische Umgebungsstrahlung eliminiert wird, was bei bestimmten Strahlern in geeigneter Verteilung zu einer Erhöhung der Nachweisempfindlichkeit bzw. einer Verbesserung des Rauschabstandes (Signal/Hintergrund-Verhältnis) beitragen kann. Insbesondere ist diese Betriebsart bei sehr dünnen Proben wie z.B. 32P-Proben auf der Oberfläche einer Unterlage (Membran) die praktisch einzig mögliche, da die Oberflächenladungen sehr gering sind.

Im Gegensatz hierzu wird bei der Antikoinzidenz-Betriebsweise der beiden Detektoren ein Teilchen nur dann gezählt, wenn es den unteren, der Probenplatte zugeordneten Detektor durchdringt, nicht aber den zusätzlichen, im Abstand D oberhalb dieses ersten Detektors liegenden zweiten Detektor. Bei dieser Betriebsweise werden folglich nur diejenigen Partikel (insbesondere Oberflächenladungen) zur Auswertung, d.h. zur Gewinnung der Ortsinformation, zugelassen, die nicht in der Lage sind, in beiden Detektoren einen Zählimpuls hervorzurufen.

Der Vorteil dieser Betriebsweise ist zunächst darin zu sehen, daß neben dem hoch-energetischen Anteil auch die hoch-energetische kosmische Strahlung eliminiert wird und somit bei bestimmten Proben auch hier eine Verbesserung des Untergrundrauschens erzielt wird. Diese Methode hat auch einen großen Vorteil bei "dicken" Proben.

Die bei dieser Betriebsweise vorgenommene Auswahl der nieder-energetischen Strahlungskomponenten (unter Einschluß der Bremsstrahlung) hat den Vorteil, daß Partikel in diesem Energie- bzw. Reichweitenbereich in der Regel weit in der Überzahl sind gegenüber den höher-energetischen Partikel aus dem oberen "Ende" des Spektrums und somit eine Auswertung dieser nieder-energetischen Strahlungskomponente grundsätzlich zu einer höheren Impulsrate und damit zu einer besseren Nachweisempfindlichkeit führen wird.

Die Auswahl der nieder-energetischen Strahlung eröffnet also zunächst einmal die Möglichkeit, den durch die bei Proben gewisser Dicke gebildeten Oberflächenladungen bedingten, weit überwiegenden Teil der Partikel zur Gewinnung der Ortsinformation heranzuziehen.

Eine besonders vorteilhafte Möglichkeit, bei beiden Betriebsweisen die Ortsauflösung zu verbessern, besteht darin, zwischen dem unteren (der Probe zugewandten) Detektor und der Probenplatte eine Potentialdifferenz anzulegen, die eine Saugwirkung auf die auf der Probenplatte befindlichen Oberflächenladungen und energiearme $\beta$-Partikel ausübt. Es wurde überraschenderweise festgestellt, daß ein derartiges Saugfeld in der Lage ist, als Kollimator zu wirken, wobei im Unterschied zur oben geschilderten Wirkungsweise des Kollimators praktisch der gesamte Raumwinkel von $2\pi$ erfaßt wird. Es hat sich gezeigt, daß bei Anti-Koinzidenz Betriebsweise die nachgewiesene Strahlungsintensität beispielsweise bei 32P (aus einer dickeren Probenschicht, z.B. DS-Platten) um einen wesentlichen Faktor (bis zu 20) höher ist als mit der oben geschilderten Betriebsweise der Koinzidenzschaltung. Hierbei ist es besonders wünschenswert, die energiereichen Partikel durch die Antikoinzidenzschaltung zu eliminieren, da diese naturgemäß vom Saugfeld in ihrer Bahn geringer beeinflußbar sind als die schwachenergetischen (und somit langsameren) Partikel (auch solche, die aus der Bremsstrahlung stammen) aus dem unteren Teil des Spektrums.

Eine weitere Verbesserung der Ortsauflösung läßt sich durch eine Impulshöhendiskriminierung erreichen, wie sie in der De-PS 30 50 716 für ein eindimensionales, ortsempfindliches Zählrohr beschrieben ist. Die Impulshöhendifferenz zwischen senkrecht und schräg laufenden Teilchen wird mit Saugfeld noch vergrößert, da hier entsprechend der Saugfeldstrecke mehr Ladungen in den Detektor gelangen.

Beide Betriebsweisen haben ihre spezifischen Vorteile und können durch relativ einfache schaltungstechnische Maßnahmen in der Auswerteeinheit des erfindungsgemäßen Detektors alternativ durch einfache Umschaltung realisiert werden, so daß durch eine derartige Umschaltung einerseits (verbunden mit einem variablen Abstand der beiden Detektoren und des Abstandes des unteren Zählrohrs zur Probenplatte) eine optimale Anpassung von Ortsauflösung oder Nachweisempfindlichkeit des erfindungsgemäßen Detektors an Art und Beschaffenheit der Probe und die Strahlungscharakteristik des jeweils eingesetzten Strahlers hinsichtlich der Energie bzw. der Reichweite der radioaktiven Strahlung gegeben ist.

Weitere Ausgestaltungen des Erfindungsgedankens sind Unteransprüchen zu entnehmen.

Ein Ausführungsbeispiel des erfindungsgemäßen Detektors wird nun anhand von Zeichnungen näher erläutert, es zeigen:

| | |
|---|---|
| Figur 1: | Eine schematische Explosionsdarstellung des Detektors mit den beiden Zählrohren, |
| Figur 2A/2B: | eine schematische Darstellung der beiden Betriebsweisen (Koinzidenz bzw. Antikoinzidenz), und |
| Figur 3: | eine schematische Funktionsdarstellung der Wirkungsweise der Logikschaltung 40, |
| Figur 4: | eine schematische Darstellung einer Meßanordnung, |
| Figur 5-7: | gemessene Spektren bei einer Meßanordnung gemäß Figur 4 mit 32P, |
| Figur 8: | gemessene Spektren bei einer Meßanordnung gemäß Figur 4 mit 14C. |

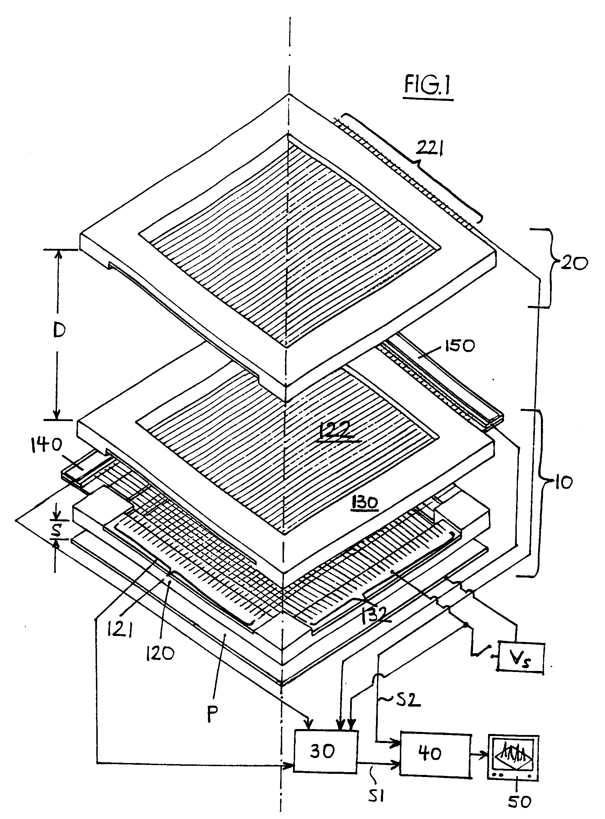

Der in Figur 1 dargestellte ortsempfindliche Detektor besteht in seinem zentralen Teil aus einem ortsempfindlichen Proportionalzählrohr 10 mit folgendem grundsätzlichen Aufbau: Zur Auslesung der Impulse dienen zwei Kathodendrahtgitter 122,132 und ein in der Mitte hierzu liegendes Anodendrahtgitter 121. Das untere Kathodendrahtgitter 132 und das Anodendrahtgitter 121 befinden sich auf einem gemeinsamen Rahmen 120, dem Kathodendrahtgitter 132 ist zur Auslesung eine erste Verzögerungsleitung 140 (delay line) zugeordnet. Das zweite Kathodendrahtgitter 122 ist in einem zweiten Rahmen 130 eingespannt, der entsprechend auch die zweite zugeordnete Verzögerungsleitung 150 trägt. Durch entsprechende Einschnitte in den Rahmen 120,130 werden die Abstände der einzelnen Drahtebenen zueinander definiert, wenn die beiden Rahmen 120 und 130 zur Bildung einer Zählkammer aufeinander gesetzt sind.

Die Signale der beiden Verzögerungsleitungen 140,150 werden einer Auswerteeinheit 30 zugeführt, in der aufgrund der zeitlich versetzt eintreffenden Impulse der beiden Verzögerungsleitungen 140,150 die Ortsinformation gewonnen wird, d.h. die x-y-Koordinate (mit der erreichbaren Ortsauflösung) des Ursprungsortes des nachgewiesenen Strahlungspartikels bzw. der von diesem verursachten Sekundär-Teilchen.

Die Wirkungsweise und der konstruktive Aufbau eines derartigen Proportional-Zählrohres ist im einzelnen in der oben schon genannten DE-OS detailliert beschrieben und bedarf somit keiner weiteren Erläuterung.

Im Abstand D oberhalb des ersten Zählrohrs 10 ist ein zweites Zählrohr 20 mit einer parallelen Ausleseebene 221, ebenfalls bestehend aus mehreren parallelen Auslesedrähten, angeordnet. Beim Ausführungsbeispiel der Figur 1 ist hier nur eine Drahtebene dargestellt, also zwangsläufig die Anodendrahtebene, die in einem oder mehreren Anodendrähten erzeugten Zählimpulse werden dann zusammengefaßt und über eine zweite Auswerteleitung S2 zusammen mit der auf der Leitung S1 zur Verfügung gestellten Ortsinformation der Auswerteeinheit 30 einer Logikeinheit 40 zugeführt. (Die Kathodenebene des zweiten Zählrohrs 20 ist aus Gründen der Übersichtlichkeit nicht dargestellt).

Es soll besonders betont werden, daß das zweite Zählrohr 20 kein ortsempfindliches Zählrohr zu sein braucht, da es hier lediglich um die Gewinnung von Koinzidenz- bzw. Antikoinzidenz-Informationen geht. Es ist jederzeit möglich, eine andere konstruktive Variante gemäß der hier dargestellten zu wählen, beispielsweise kann der konstruktive Aufbau des Zählrohrs 20 (abgesehen von den unnötigen Verzögerungsleitungen) dem konstruktiven Aufbau des Zählrohrs 10 entsprechen. Entscheidend ist nur, daß durch das Zählrohr 20 durchtretende Strahlung vollständig und zuverlässig erfaßt wird, d.h. zu einem Zählimpuls auf der Leitung S2 verwertet wird.

Der Abstand D zwischen den beiden Zählrohren 10 und 20 ist auf konstruktive Art und Weise leicht variabel zu gestalten, beispielsweise durch eine Anzahl von Zwischenrahmen entsprechend den Rahmen 120,130, so daß eine Sandwich-Bauweise entsteht, bis der gewünschte Abstand D erreicht ist; alternativ oder in Verbindung damit kann auch eine Absorberplatte oder Folie zwischen beiden Detektoren angebracht werden.

Entsprechend kann auch verfahren werden, um einen bestimmten Abstand S zwischen dem unteren Zählrohr 10 und der Probenplatte P zu erreichen.

Zwischen der Probenplatte P und der unteren Drahtebene des Zählers 10, der Kathodendrahtebene 132, kann eine Spannung $V_s$ angelegt werden, derart, daß auf die aus der Probenplatte P austretenden Ladungsträger eine Beschleunigungskraft in Richtung zum Zählrohr 10 auftritt.

Die Logikschaltung 40 ist zweckmäßigerweise auf die beiden Betriebsarten der beiden Zählrohre 10 und 20 (Koinzidenz oder Antikoinzidenz) umschaltbar, das Ausgangssignal der Logikschaltung 40 gelangt beispielsweise an einen Monitor 50, wo dann in geeigneter grafischer Darstellung die Radioaktivitätsverteilung auf der Probenplatte P ablesbar ist.

Die Funktion der Logikschaltung 40 besteht dabei im wesentlichen darin, nur solche Ortsinformationen (Leitung S1) der Auswerteeinheit 30 an das Display 50 weiterzugeben, die die Koinzidenzbedingung bzw. Antikoinzidenzbedingung erfüllen, wie dies im folgenden erläutert wird:

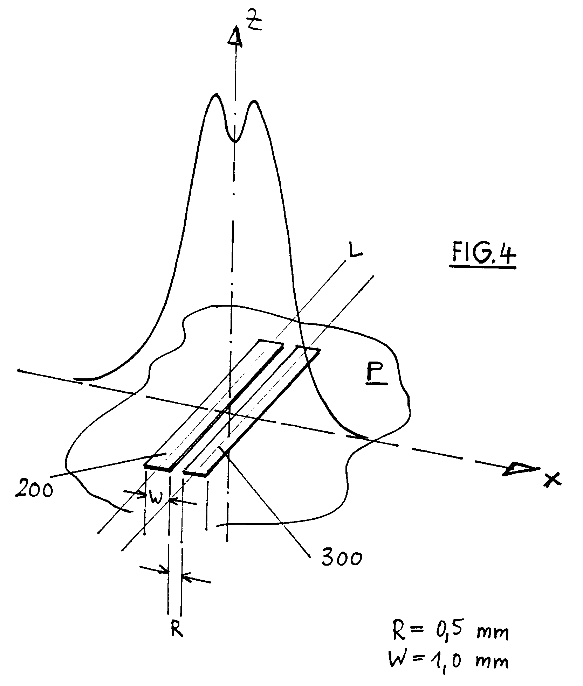

Figur 3 zeigt eine schematische Darstellung der Funktionsweise der Logikschaltung 40. Bei der in Figur 3 dargestellten Stellung des Schalters R befinden sich die beiden Zählrohre 10 und 20 im Koinzidenzbetrieb, d.h. es werden nur diejenigen Zählimpulse zur Darstellung bzw. weiteren Auswertung weitergegeben, die von einem Partikel sowohl im ersten Zählrohr 10 als auch im zweiten Zählrohr 20 (mit einer Verzögerung $\tau$) hervorgerufen wurden.

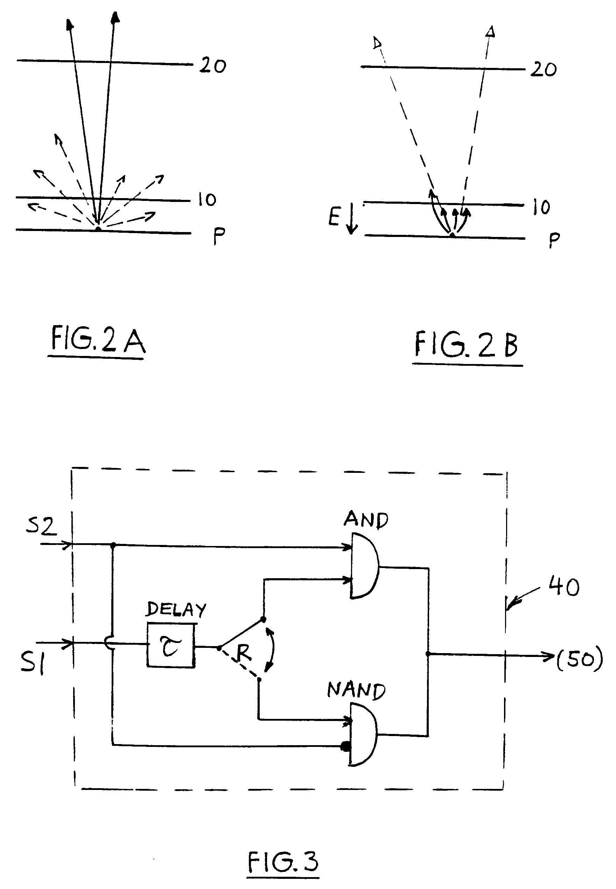

Die Auswirkungen bei dieser Betriebsweise, also der Koinzidenzschaltung der beiden Zähler 10 und 20, sind schematisch in der Figur 2A dargestellt:
Es werden nur diejenigen Partikel zur Auswertung zugelassen (mit durchgezogenen Linien dargestellt), die in beiden Zählrohren einen Zählimpuls hervorrufen, d.h. , bei einer entsprechenden Wahl des Abstandes D, es wird nur der hoch-energetische Anteil der Gesamtstrahlung ausgewertet, wogegen Partikel mit niedrigerer Energie und somit geringerer Reichweite (gestrichelt dargestellt) das zweite Zählrohr 20 nicht erreichen können und somit aus der Zählung und damit der Gewinnung der Ortsinformation herausfallen.

Die bei dieser Koinzidenzschaltung Zählimpulse hervorrufenden Strahlen stammen daher von hoch-energetischen Partikeln der Strahlungsquelle auf der Probenplatte P oder aus hoch-energetischen Komponenten der von diesem Strahler verursachten Bremsstrahlung oder aus hoch-energetischen Teilchen der kosmischen Strahlung.

Befindet sich der Schalter R in der in Figur 3 gestrichelt dargestellten Position, so werden die beiden Zählrohre 10 und 20 in Antikoinzidenz betrieben, diese Funktion ist symbolisch durch ein logisches NAND-Bauteil dargestellt. Dies bedeutet, daß Zählimpulse vom ersten Zählrohr 10 nur dann zur weiteren Auswertung herangezogen wird, wenn (innerhalb eines bestimmten Zeitfensters) kein Zählimpuls vom zweiten Zählrohr 20 eintrifft.

Das Ergebnis dieser Betriebsweise ist in Figur 2B skizziert:

Die Antikoinzidenz-Bedingung erfüllen nur die schwach-energetischen Teilchen, also diejenigen Partikel, die entweder originär aus der Strahlungsquelle selbst stammen, aus dem überwiegend nieder-energetischen Teil der Bremsstrahlung oder aus nieder-energetischer Umgebungsstrahlung. Die Bahnen dieser bei der Antikoinzidenz-Betriebsweise zur Auswertung zugelassenen Teilchen sind in Figur 2B durch durchgehende Linien dargestellt, wogegen die nicht zur Auswertung zugelassenen Teilchen durch gestrichelte Linien dargestellt sind, also die Bahnen, die die Koinzidenzbedingung erfüllen. Bei der Antikoinzidenz-Betriebsweise scheiden also hochenergetische $\beta$-Strahlen des Strahlers, hochenergetische Anteile des Bremsspektrums und kosmische Strahlung (z.B. Myonen oder Mesonen) bei der Auswertung aus.

Die beiden Betriebsweisen der Zählrohre 10 und 20 sind also insofern als komplementär anzusehen, als jeweils nur eine bestimmte Gruppe von Teilchen ausgewertet wird, und die jeweils andere Gruppe nicht zur Gewinnung der Ortsinformation benutzt wird.

Bei beiden Betriebsweisen ist die Spannung $V_s$ (Figur 1) zwischen Probenplatte P und Zählrohr 10 angelegt, so daß das entstehende elektrische Saugfeld E insbesondere die hier interessierenden schwach-energetischen Partikel stark bündelt und nach oben hin ablenkt, wodurch eine wesentliche Verbesserung der Ortsauflösung bei gleichzeitiger hoher Nachweisintensität (Zählrate) erreicht wird.

Bei beiden Betriebsarten befanden sich die Probenplatte P und die beiden Zählrohre 10,20 in einem gemeinsamen Gehäuse, wie dies in der oben schon genannten DE-OS 37 35 296 ausführlich beschrieben ist. Was die konstruktiven Details der ortsempfindlichen Messung hinsichtlich deren Auswertung einerseits und des konstruktiven Aufbaus eines solchen Detektors andererseits angeht, wird daher nochmals ausdrücklich auf die genannte DE-OS 37 35 296 verwiesen.

Für beide Betriebsarten werden anbei die Meßergebnisse von zwei Proben (14C und 32 P), abhängig von den Werten der verwendeten Parameter anhand der Figuren 4 bis 8 dargestellt.

Ausgemessen wurde jeweils eine Probenplatte P, auf der sich zwei radioaktiv markierte 1 mm breite Streifen im Abstand von 0,5 mm voneinander befanden. Die Strahler (14C oder 32P) befanden sich hierbei in einem metallisch leitenden Substrat (z.B. mit Al); Gegenstand der Messung bzw. der Auswertung ist es folglich, zu beurteilen, mit welcher Parameterwahl der Abstand dieser beiden streifenförmigen radioaktiven Quellen am besten erkennbar ist, was letztlich ein Maß für die erreichbare Ortsauflösung ist.

Beim unteren Zählrohr 10 hatten die drei Drahtebenen einen Abstand von 1,5 mm untereinander, die Auslesedrähte ihrerseits hatten einen Abstand gegeneinander von 2,0 mm.

Als zweites Zählrohr 20 wurde ein Zählrohr des gleichen Aufbaus verwendet, zur Auslesung wurden die x- und y-Auslesedrähte zusammengeschaltet.

Die beiden Zählrohre hatten einen Abstand D von etwa 5 cm, die untere Zählebene des ersten Zählrohrs 10 hatte einen Abstand S von der Probenplatte P von etwa 5 mm.

Zwischen der Probenplatte P und der unteren Ausleseebene (Auslesedrähte 121) konnte eine Spannung $V_s$ von -2900 V angelegt werden, dadurch, daß die untere Ausleseebene 121 geerdet war und die Probenplatte P auf ein Potential von -2900 V gelegt wurde.

Im folgenden wird zur Verdeutlichung der Auswirkungen der erfindungsgemäßen Lehre eine kurze Gegenüberstellung der Meßergebnisse mittels der Figuren 4 ff gegeben, hierbei ist in Figur 4 schematisch dargestellt, wie sich im Prinzip die aus zwei Streifen 200 und 300 bestehende Quelle in der Zählratenverteilung quer zur Längsachse L der Streifen 200,300 wiederspiegelt. Hier ist von Interesse die Nachweisempfindlichkeit, also die Zählrate pro Zeiteinheit (cpm) ($\triangleq$ dem Flächeninhalt des Spektrums) und die Ortsempfindlichkeit, also die "Erkennbarkeit" der beiden Streifen bzw. deren Abstand im gemessenen Spektrum. Anhand dieser Darstellung lassen sich die folgenden Meßergebnisse grob interpretieren, wobei auf eine Einzelwertung verzichtet wird:

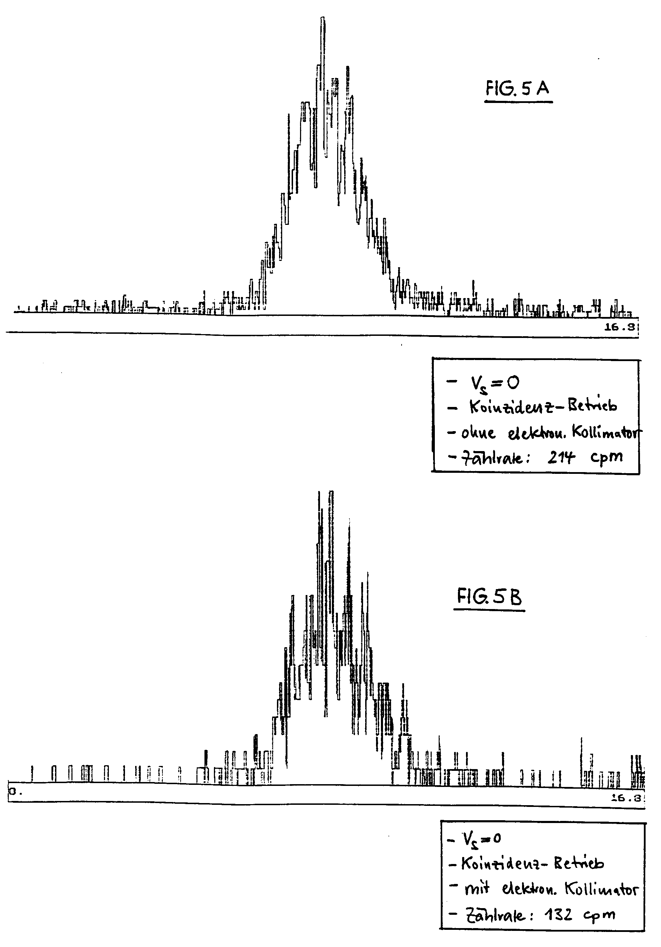

Die Figuren 5 bis 7 betreffen Messungen an einer 32P-Strahlungsquelle, d.h. die in Figur 4 dargestellten Streifen 200 und 300 sind mit einem 32P-$\beta$-Strahler markiert.

Unterhalb der jeweiligen Figuren sind die wesentlichen Versuchsparameter angegeben, wobei $V_s$ die angelegte Spannung zwischen Probenplatte P und unterer Ausleseebene angibt; unter "elektronischer Kollimator" ist ein Verfahren bzw. eine Anordnung gemeint, wie sie in der DE-PS 30 50 716 im einzelnen beschrieben ist; es handelt sich hierbei im wesentlichen um eine Impulshöhenbegrenzung, die bei beiden Ausleseebenen eingesetzt werden kann und durch die eine Auswertung von "zu schräg" verlaufenden Teilchenbahnen verhindert wird, die die Ortsauflösung beeinträchtigen.

Die Funktion des elektronischen Kollimators ist beispielsweise den Figuren 5A und 5B entnehmbar, bei ansonsten gleichen Parametern, also im Koinzidenzbetrieb und ohne die Anwendung der Saugspannung $V_s$: Man erkennt hier zwar eine deutlichere Strukturierung des Spektrums, die aber im wesentlichen auf den größeren Darstellungsmaßstab der Figur 5B gegenüber der Figur 5A zurückgeht, aufgrund der naturgemäß geringeren Zählrate des Ausführungsbeispiels gemäß Figur 5B bei eingeschaltetem Kollimator, da, wie oben, ein Teil der Strahlung durch die Anwendung dieses elektronischen Kollimationsverfahrens nicht zur Auswertung zugelassen wird. Eine wesentliche Verbesserung der Ortsauflösung ist bei Anwendung des elektronischen Kollimators im Vergleich der beiden Figuren 5A und 5B nicht erkennbar.

Auch die Koinzidenz-Betriebsweise der beiden Zählrohre 10,20 ermöglicht keine zweifelsfreie Auflösung der beiden Probenstreifen 200/300.

Die Anlegung der Saugspannung $V_s$ (Figur 5C) mit "normaler" Auswertung durch die untere Zähldrahtebene (also ohne Koinzidenz- oder Antikoinzidenzbedingung) und ohne elektronischen Kollimator zeigt zwar eine Erhöhung der Zählrate und somit eine größere Nachweisempfindlichkeit, da keinerlei Einschränkungen hinsichtlich der Auswertung der die untere Zähldrahtebene erreichenden Partikel getroffen ist. Die Ortsauflösung ist aber auch hier unbefriedigend, die beiden markierten Streifen 200/300 sind nicht erkennbar.

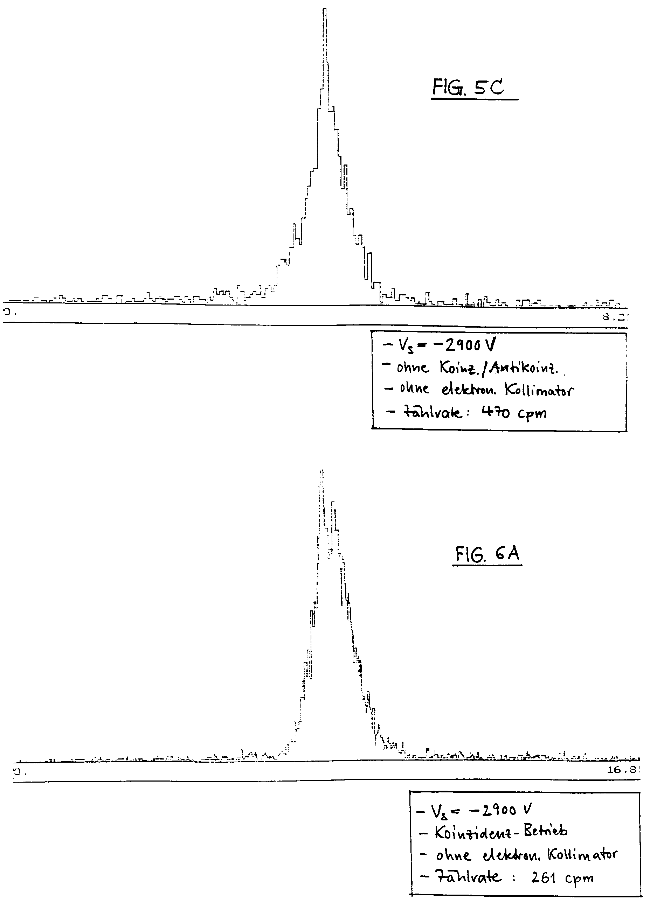

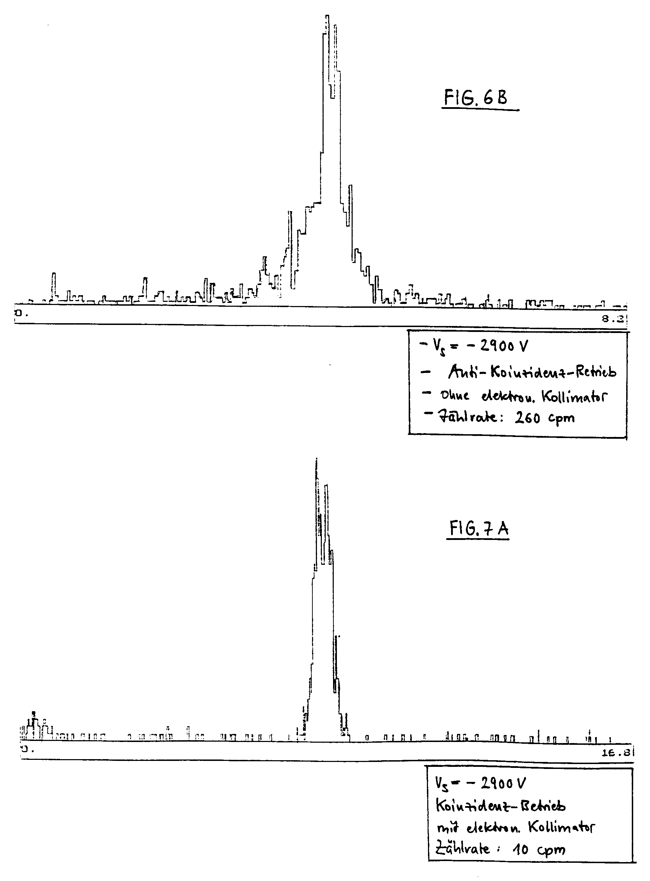

In den Figuren 6A und 6B sind Zwei Betriebsweisen gegenübergestellt, wo bei angelegter Saugspannung und ohne elektronischen Kollimator einmal der Koinzidenzbetrieb (Figur 6A), ein andermal der Antikoinzidenzbetrieb (Figur 6B) gegenübergestellt sind; bei etwa gleicher Nachweisempfindlichkeit (gleiche Zählraten) ist hier eine signifikante Einsenkung im Peak-Bereich der beiden Spektren zu erkennen, also eine Auflösung der in Figur 4 dargestellten Probenstruktur. Insgesamt scheint die Anti-Koinzidenz-Betriebsweise etwas aussagekräftiger zu sein, da die Einsenkung im Peak-Bereich etwas deutlicher ausfällt und die Linienverbreiterung erst im "Fußbereich" des Spektrums auftritt.

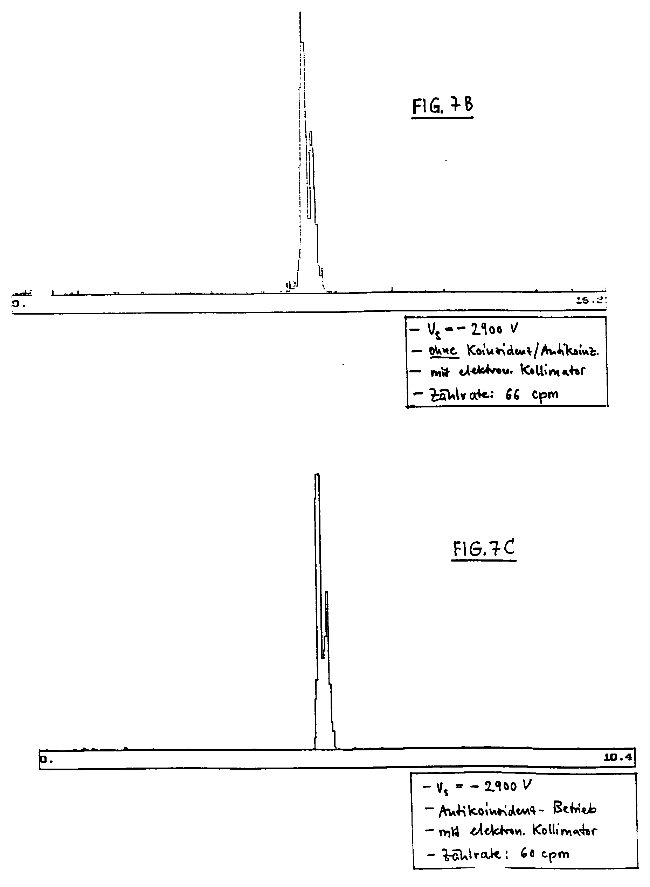

Die Figur 7 zeigt drei Messungen, bei denen sämtliche Optionen eingesetzt wurden, also sowohl eine Saugspannung $V_s$ von -2900 V, als auch der elektronische Kollimator und lediglich die Betriebsarten wechseln:

Man erkennt durch Vergleich dieser Figuren, daß der Koinzidenz-Betrieb zwar eine Auflösung der Probenstruktur durch die deutliche Einsenkung im Peak-Bereich ermöglicht, aber nur eine relativ geringe Nachweisempfindlichkeit hat, was darauf hindeutet, daß nur relativ wenige Partikel die hier auferlegten Bedingungen "Koinzidenz" und "senkrecht zur Zählebene" (elektronischer Kollimator) erfüllen.

Bei der "konventionellen" Auswertung, also weder mit Koinzidenz, noch mit Antikoinzidenz-Betriebsweise (Figur 7B) ergibt sich eine wesentlich höhere Nachweisempfindlichkeit (Zählrate) bei schon sehr guter Ortsauflösung, wobei lediglich die "Fußverbreiterungen" im Spektrum noch störend wirken.

Dies läßt sich schließlich noch beseitigen (Figur 7C), wenn die beiden Zählrohre 10,20 in Antikoinzidenz geschaltet sind, hier ergibt sich eine ähnlich gute Nachweisempfindlichkeit (Zählrate) wie beim Versuch gemäß Figur 7B, die störenden "Fußverbreiterungen" sind jedoch vollständig verschwunden.

Es zeigt sich also, daß bei einer solchen Messung mit 32P als Strahler und dessen Anordnung in einem metallischen Substrat offenbar der Antikoinzidenz-Betrieb sowohl hinsichtlich der Ortsauflösung als auch hinsichtlich der Nachweisempfindlichkeit zu optimalen Ergebnissen führt.

Der Vergleich der Figuren 7A bis 7C läßt auch noch folgendes erkennen:

Zunächst zeigt sich, daß die Bedingung

$$n = n_{ak} + n_k$$

näherungsweise erfüllt ist, d.h. die Zählrate n ohne (einschränkende) Koinzidenz oder Antikoinzidenz-Bedingung (Figur 7B) ist etwa gleich der Summe der Zählrate $n_{ak}$ im Antikoinzidenz-Betrieb (Figur 7C) und der Zählrate $n_k$ im Koinzidenz-Betrieb (Figur 7A). Im einzelnen hängt die Genauigkeit der Erfüllung der genannten Gleichung in der Praxis davon ab, wie wirksam die Antikoinzidenzbedingung erfüllbar ist, d.h. , ob jedes Antikoinzidenzsignal auch ein eventuelles Zählsignal annuliert.

Darüber hinaus läßt sich erkennen, daß hinsichtlich der allgemeinen Auswerteeigenschaften der Koinzidenz-Betrieb bei dieser Meßanordnung (Figur 7A) schlechter zu bewerten ist als der Betrieb ohne Koinzidenz oder Antikoinzidenz-Bedingung, letztere Messung jedoch wiederum schlechter als der Antikoinzidenz-Betrieb, oder anders ausgedrückt, der Verzicht auf Koinzidenz oder Antikoinzidenz-Bedingung führt zu einer Auswertequalität, bezüglich derer die eine logische Bedingung (hier der Koinzidenzbetrieb) eine qualitative Verschlechterung, die andere logische Bedingung (hier Antikoinzidenzbetrieb) eine qualitative Verbesserung darstellt.

Das in den Figuren 7 erkennbare Meßergebnis deutet darauf hin, daß bei dieser Strahlungsquelle offenbar die nieder-energetischen Partikel im Energiespektrum des 32P-Strahlers (und die oben geschilderten Nebeneffekte) weit überwiegen, so daß deren Auswertung zu einer optimalen Nachweisempfindlichkeit einerseits, als auch einer hohen Ortsauflösung führt.

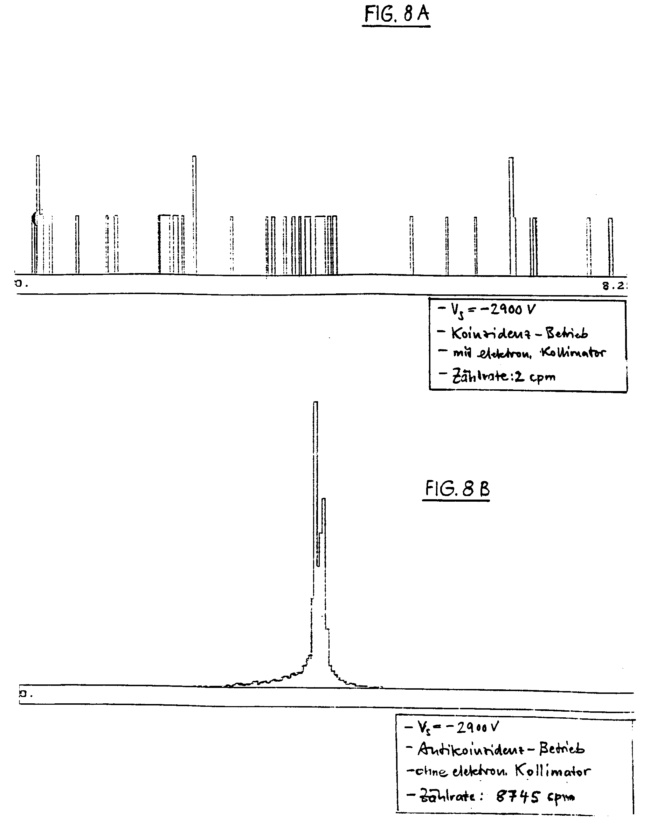

Die Figuren 8A...8C zeigen drei Messungen, die mit einem 14C-Strahler durchgeführt wurden, der in derselben Form (in einem Metall-Substrat) vorlag, wie in Figur 4 dargestellt.

Es ist zunächst offenbar, daß der Koinzidenzbetrieb (Figur 8A) zu einer minimalen Zählrate führt, die ausschließlich auf Hintergrundstrahlung (Rauschen) zurückzuführen ist; das bedeutet, daß die β-Strahlung des 14C-Strahlers praktisch keine Partikel emittiert, deren Energie und somit mittlere Reichweite ausreichend ist, um die Koinzidenz-Bedingung zu erfüllen (das obere Zählrohr zu erreichen).

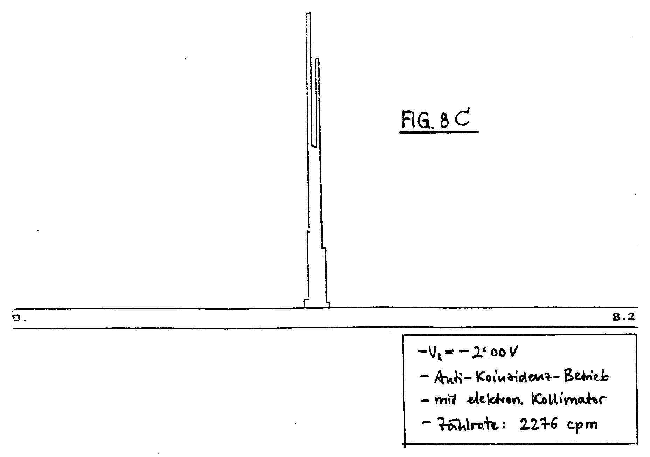

Hier zeigen die Figuren 8B und 8C, daß im Antikoinzidenz-Betrieb mit Saugspannung $V_s$ eine einwandfreie Auswertung ermöglicht wird, die durch "Zuschaltung" des elektronischen Kollimators (Figur 8C) zwar eine Einbuße an Nachweisempfindlichkeit (Zählrate) auf etwa 1/4 bringt, die störenden "Fußverbreiterungen" im Spektrum der Figur 8B aber wirkungsvoll beseitigt.

Das Ergebnis fällt hier also noch deutlicher als bei den oben beschriebenen Meßergebnissen mit 32P-Strahler zugunsten des Antikoinzidenz-Betriebs der beiden Zählrohre aus, wobei durch den elektronischen Kollimator noch eine Verbesserung der Ortsempfindlichkeit erreicht wird.

Im allgemeinen hat sich insbesondere herausgestellt, daß bei dickeren Proben (z.B. Dünnschichtplatten) die Antikoinzidenzmethode zu besseren Ergebnissen führt, sowohl hinsichtlich der Ortsauflösung als auch der Nachweisempfindlichkeit (Zählrate). Bei dünnen Proben (z.B. Blots mit Nylon-Membran) erweist sich die Koinzidenz-Methode als überlegen, hier war Strahlung unter der Antikoinzidenzbedingung kaum nachweisbar.

Die Diskussion der Meßergebnisse zeigt folglich, daß es abhängig vom Strahlertyp und dessen Vorliegen auf der Probenplatte mit dem ortsempfindlichen Detektor gemäß der Erfindung ohne weiteres möglich ist (in der Regel durch einfaches Umschalten, Zuschalten oder Abschalten), die jeweils hinsichtlich Ortsauflösung einerseits oder Nachweisempfindlichkeit andererseits optimale Lösung zu finden; anders ausgedrückt, das erfindungsgemäße Zählrohr ist hinsichtlich seiner Auswerteeigenschaften bezogen auf die jeweils zu vermessende Probe "individualisierbar", derart, daß für beliebige Proben mit einer Vielzahl von möglichen Konfigurationen von Strahlern eine Optimierung der Meßqualität auf einfache Weise erreichbar ist.

**Patentansprüche**

1. Strahlungsdetektor zum Nachweis von höher energetischer radioaktiver Strahlung, insbesondere von β-Strahlung von 32P, 35S oder 14C, mit einem von der Strahlungsquelle in einem ersten Abstand angeordneten ortsempfindlichen Detektor und einem oberhalb dieses ersten Detektors in einem zweiten Abstand angeordneten, etwa flächengleichen zweiten Detektor, sowie mit einer Auswerteeinheit zur rechnerischen Korrel-ation der Zählimpulse der beiden Detektoren zur Gewinnung der Ortsinformation,
dadurch gekennzeichnet, daß der zweite Detektor (20) mindestens eine, zum ersten Detektor parallele Ausleseebene (221) aufweist und daß die Auswerteeinheit (30, 40) eine Korrelation der Zählimpulse der beiden Detektoren (10, 20) in zeitlicher und logischer Hinsicht (Koinzidenz- oder Antikoinzidenz) zur Auswahl des niederenergetischen oder des höherenergetischen Teils des Gesamtstrahlungsspektrums der nachzuweisenden Strahlung durchführt.

2. Ortsempfindlicher Detektor nach Anspruch 1, dadurch gekennzeichnet, daß der erste Detektor (10) ein Proportionalzählrohr mit einer mittleren Anodendrahtebene (121) und zwei hierzu parallelen Auslese-Drahtebenen (122,132) ist.

3. Ortsempfindlicher Detektor nach Anspruch 2, dadurch gekennzeichnet, daß der Abstand der parallelen Drähte der Ausleseebenen (122,132) untereinander ≤ 2 mm beträgt.

4. Ortsempfindlicher Detektor nach Anspruch 2, dadurch gekennzeichnet, daß der Abstand der beiden Auslesedrahtgitter (122,132) vom Anoden-Drahtgitter (121) ≤ 2 mm beträgt.

5. Ortsempfindlicher Detektor nach Anspruch 1, dadurch gekennzeichnet, daß der zweite Detektor (20) ein Anoden-Drahtgitter (221) aufweist, von dem auch die Ausleseimpulse dieses Detektors abgenommen und der Auswerteeinheit zugeführt werden, oder ebenfalls (wie der erste Detektor) eine Anodendrahtebene und zwei Auslesedrahtebenen zum ortsempfindlichen Betrieb aufweist.

6. Ortsempfindlicher Detektor nach Anspruch 1, gekennzeichnet durch die Ausbildung der Auswerteeinheit (30,40) derart, daß nur diejenigen Zählimpulse eines der Detektoren (10,20) ausgewertet werden, die innerhalb eines vorgegebenen Zeitfensters bezogen auf einen Zählimpuls des anderen Detektors eintreffen (Koinzidenzschaltung).

7. Ortsempfindlicher Detektor nach Anspruch 1, dadurch gekennzeichnet, daß nur diejenigen Zählimpulse ausgewertet werden, die innerhalb eines vorgebbaren Impulshöhenfensters liegen (Impulshöhendiskriminierung/elektronischer Kollimator).

8. Ortsempfindlicher Detektor nach Anspruch 1, gekennzeichnet durch die Ausbildung der Auswerteeinheit derart, daß nur diejenigen Zählimpulse des ortsempfindlichen, ersten Detektors (10) ausgewertet werden, zu denen innerhalb eines vorgegebenen Zeitfensters nach deren Registrierung kein Zählimpuls des zweiten Detektors (20) eintrifft (Antikoinzidenzschaltung).

9. Ortsempfindlicher Detektor nach Anspruch 8, dadurch gekennzeichnet, daß zwischen der Probenplatte (P) und dem ersten Detektor (10) ein elektrisches Feld (E) angelegt ist, dessen Wirkung darin besteht, daß eine Kraft auf die emittierten Teilchen in Richtung zum ersten Detektor (10) ausgeübt wird.

10. Ortsempfindlicher Detektor nach Anspruch 9, dadurch gekennzeichnet, daß das elektrische Feld (E) in der Größenordnung $10^2...10^4$ V/cm beträgt.

11. Ortsempfindlicher Detektor nach Anspruch 1, dadurch gekennzeichnet, daß der Abstand (D) zwischen den beiden Zählrohren (10,20) etwa 50 mm beträgt.

12. Ortsempfindlicher Detektor nach Anspruch 1, dadurch gekennzeichnet, daß der Abstand (S) zwischen der Probenplatte (P) und der unteren Ausleseebene (121) des ersten Zählrohrs (10) etwa 5-10 mm beträgt.

13. Ortsempfindlicher Detektor nach Anspruch 6 und 8, dadurch gekennzeichnet, daß die Auswerteeinheit zwischen der Koinzidenz-Betriebsweise und der Antikoinzidenz-Betriebsweise der beiden Detektoren umschaltbar ist.

14. Ortsempfindlicher Detektor nach Anspruch 1, dadurch gekennzeichnet, daß an der Probenplatte (P) oder unmittelbar über ihr Zählimpulse (beispielsweise mit einem separaten Drahtgitter) ausgelesen werden, die in Koinzidenz mit den Zählimpulsen der Anodendrahtebene (121) des Detektors (10) gemessen werden, wodurch der Einfluß von Verunreinigungen wie z.B. Staubpartikel an den Zähldrähten des Detektors (10) eliminiert werden.

15. Ortsempfindlicher Detektor nach Anspruch 1, dadurch gekennzeichnet, daß zwischen den beiden Detektoren (10,20) eine Absorberschicht angeordnet ist.

FIG.1

FIG. 2 A

FIG. 2 B

FIG. 3

FIG.4

R= 0,5 mm
W= 1,0 mm

FIG. 5 A

16.3

- $V_S = 0$
- Koinzidenz-Betrieb
- ohne elektron. Kollimator
- Zählrate: 214 cpm

FIG. 5 B

16.3

- $V_S = 0$
- Koinzidenz-Betrieb
- mit elektron. Kollimator
- Zählrate: 132 cpm

12

FIG. 5C

- $V_s = -2900\,V$
- ohne Koinz./Antikoinz.
- ohne elektron. Kollimator
- Zählrate: 470 cpm

FIG. 6A

- $V_s = -2900\,V$
- Koinzidenz-Betrieb
- ohne elektron. Kollimator
- Zählrate: 261 cpm

13

FIG. 6 B

$-V_s = -2900\,V$

– Anti-Koinzidenz-Betrieb

– Ohne elektron. Kollimator

– Zählrate: 260 cpm

FIG. 7 A

$V_s = -2900\,V$

Koinzidenz-Betrieb

mit elektron. Kollimator

Zählrate: 10 cpm

14

FIG. 7B

- $V_s = -2900$ V
- ohne Koinzident/Antikoinz.
- mit elektron. Kollimator
- Zählrate: 66 cpm

FIG. 7C

- $V_s = -2900$ V
- Antikoinzidenz- Betrieb
- mit elektron. Kollimator
- Zählrate: 60 cpm

15

## FIG. 8 A

- $V_s = -2900\ V$
- Koinzidenz - Betrieb
- mit elektron. Kollimator
- Zählrate: 2 cpm

## FIG. 8 B

- $V_s = -2900\ V$
- Antikoinzidenz - Betrieb
- ohne elektron. Kollimator
- Zählrate: 8745 cpm

FIG. 8 C

8.2

−V_t = −2ᶜ00 V
− Anti−Koinzidenz−Betrieb
− mit elektron. Kollimator
− Zählrate: 2276 cpm

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5 ) |
|---|---|---|---|
| D,A | EP-A-0 312 829 (LABORATORIUM PROF. DR. RUDOLF BERTHOLD)<br>* Spalte 1, Absatz 1 -Absatz 2 *<br>* Spalte 7, Zeile 11 - Zeile 28 *<br>* Spalte 10, Zeile 52 - Spalte 11, Zeile 34; Abbildungen 1,2,8 *<br>--- | 1-5,7,11 | H01J47/06<br>G01T1/17 |
| A | NUCLEAR INSTRUMENTS AND METHODS<br>Bd. 143, 1977, AMSTERDAM NL<br>Seiten 391 - 397<br>HAIN OONA ET AL. 'A COUNTER SYSTEM FOR NATURAL C14 MEASUREMENT'<br>* Zusammenfassung *<br>* Seite 392, rechte Spalte, Absatz 2 *<br>--- | 1,6-8,13 | |
| A | HERFORTH UND KOCH 'RADIOPHYSIKALISCHES UND RADIOCHEMISCHES GRUNDPRAKTIKUM'<br>1959 , BERLIN<br>* Seite 221, Absatz 1 - Seite 222, Absatz 2; Abbildungen 96,97 *<br>--- | 1,6,15 | |
| A | GB-A-2 190 787 (PULLAN)<br>* Seite 1, Zeile 5 - Zeile 18 *<br>* Seite 3, Zeile 115 - Seite 4, Zeile 12; Ansprüche 1,2; Abbildungen 1,2 *<br><br>----- | 9,10 | RECHERCHIERTE SACHGEBIETE (Int. Cl.5 )<br><br>H01J<br>G01T |

Der vorliegende Recherchenbericht wurde für alle Patentansprüche erstellt

| Recherchenort | Abschlußdatum der Recherche | Prüfer |
|---|---|---|
| DEN HAAG | 21 JUNI 1993 | GREISER N. |